# EUROPEAN PATENT APPLICATION

(11) **EP 2 072 931 A2**
(43) Date of publication of application: **24.06.2009**
(21) Application number: 08170877.8
(22) Date of filing: 05.12.2008
(51) Int. Cl.: F24H 1/38, F24H 1/44, F24H 8/00

(54) **Heat exchanger particularly suitable for the construction of high-efficiency so-called condensing type heating boilers**

(30) Priority: 21.12.2007 IT BO20070839; 26.06.2008 IT BO20080404
(71) Applicant: A.M. S.R.L., 40139 Bologna (IT)
(72) Inventor: Vanini, Giuseppe, 40139 Bologna (IT); Vanini, Luca, 40139 Bologna (IT)
(74) Representative: Porsia, Dino

(57) **Abstract**

The heat exchanger for the construction of condensing-type heating boilers, comprises a chamber (1), in the top of which gas or other fuel is burned (4), which is provided with one or more water flow circuits defining a heating stage where the water itself is heated by the heat radiated by the combustion and absorbed by the walls of said chamber (1) and which below this has at least one stage with condensing means for absorbing the residual heat of the combustion fumes before the latter pass out of said chamber, this heat being used to preheat the water before the water enters said heating stage. Said combustion chamber and/or said condensing means contain hollow heat-exchange sections (7, 7', 17) occupying the whole of the plan-view projection of the space through which the heat passes and extending from at least one wall or zone (101) to the opposite wall or zone (201) of the chamber or body that circumscribes this space. These sections are provided with one or more longitudinal channels and are made in any material with good heat-conducting properties and such that the water to be heated and/or preheated can be passed through these channels.

## Description

The invention relates to a heat exchanger that may be used for any industrial application but that is particularly suitable for the construction of high efficiency, so-called condensing-type, heating boilers running on gas, for example, suitable for central heating systems for space heating and/or for producing hot water for supply to the taps.

The main prior art in this sector is represented by patents EP-690,281, EP 902,869, US 2,190,828, US 4,572,269, US 4,344,477 and US 3,853,309 which all describe heat exchangers in which a liquid is passed through helical or serpentine pipes enclosed in a cast metal body. All these known solutions are difficult to build and expensive because they require the use of lengthy and complex casting procedures, usually with foundry moulds and/or gravity moulds. It is a primary object of the present invention to produce a heat exchanger by cheaper and faster processes than those required in the prior art and which therefore have lower production costs. Another object of the same invention is to provide a heat exchanger of great technological reliability and very great efficiency, capable of recovering the residual heat of the fumes discharged by the boiler, with heat-exchange parts entering the combustion chamber from one to the other of at least two opposite walls or zones of said chamber.

These and other objects are achieved with a heat exchanger as set forth in the appended claim 1 and succeeding dependent claims, whose features and advantages will appear from the following description of certain preferred embodiments of the heat exchanger, illustrated purely by way of non-restrictive example in the figures of the two appended sheets of drawings, in which:
- Fig. 1 is a side view in cross section showing a first embodiment of the heat exchanger for a gas boiler;
- Fig. 2 shows other details of the heat exchanger as viewed on the cross-sectional plane II -II as marked in Figure 1;
- Fig. 3 is a partial view and end elevation of one of the extruded multi-channel sections forming the heat exchange surface of the apparatus seen in the above figures;
- Fig. 4 is an enlarged view of the circled area marked K in Figure 1, where the join occurs between the end of an extruded section as per Figure 3, and a side wall of the chamber of the heat exchanger of the boiler;
- Fig. 5 is a side view with parts in section of a second, improved embodiment of a heat exchanger for a gas boiler; and
- Fig. 6 shows further constructional details of the heat exchanger as per Figure 5, viewed on section line VI - VI. In this figure the multi-channel extruded sections of the lower stage of the heat exchanger have been shown as visible because the section lines would have made their internal channels unrecognizable.

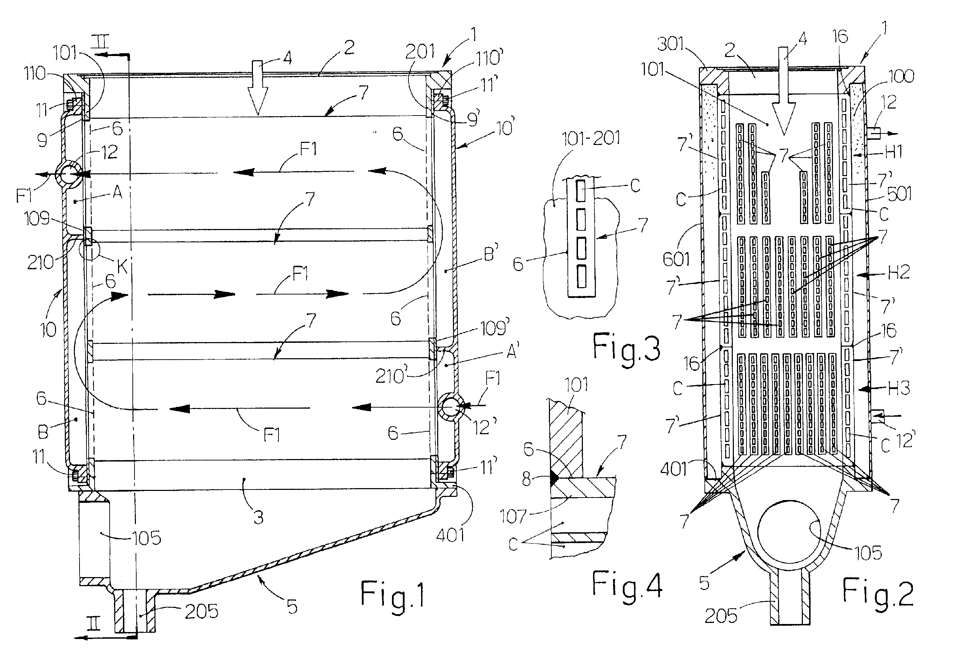

In Figures 1 and 2 it can be seen that in the first embodiment the heat-exchange structure of a so-called condensing-type gas boiler, where the heat produced by the flame of the gas burner and the residual heat of the combustion fumes is passed to at least one water circuit, comprises a parallelepiped-shaped chamber 1, which may for example be rectangular in plan view, with a top wall 301 in which is an opening 2 for connection to at least one burner (not shown), the combustion flame of which is directed downwards as indicated schematically by the arrow 4 and enters this chamber 1, the bottom wall 401 of which contains a corresponding opening 3, underneath which is fixed, with a seal around the perimeter, a manifold 5 made of any suitable material, such as a suitable filled plastic resistant to the small amount of residual heat of the combustion fumes which pass out through its side orifice 105, while the bottom wall of the same manifold 5 is suitably inclined and has at its lowest point, for example close to but lower than said discharge orifice 105, at least one opening 205 for the condensation to drain away. Connected to these orifices 105 and 205 are forced draught means and drain means, respectively, both known and not therefore examined here.

Two opposite side walls of the chamber 1, which in the present example are those marked 101 and 201, of rectangular shape and with their longest dimension extending upwards, are provided with rectangular windows 6 whose longest dimension is similarly arranged vertically and into which are inserted the ends 107 of extruded sections 7, made for example of a suitable aluminium alloy, in such a way that said ends of these sections are approximately co-planar with the outer face of said walls 101, 201, the purpose being to make it possible to run a continuous weld bead 8 along the join, by any known method that will produce a leaktight joint. The sections 7 are characterized by having a plurality of longitudinal channels C and occupy almost the whole of the height of the chamber 1, being arranged on several levels as will be explained later. The whole arrangement is such that after the welding operation, if the walls 101 and 201 of said chamber 1 are connected leaktightly to a water plumbing system, the water itself will run through the channels C of said sections 7 and be heated by the heat produced in the chamber 1 by the flame 4 of the burner and by the associated discharge gases as it passes from one of said walls 101, 201 to the other.

As can be seen in Figure 1, the outer edges 110 and 110' of covers 10, 10' made for example of diecast aluminium alloy are fixed leaktightly, using intermediate seals 9, 9' of a material suitable for the purpose, to the outside faces of the walls 101 and 201. Said edges circumscribe the entire peripheral region of the outer face of each of said walls 101, 201 in such a way that the channels C of all the sections 7 located at the various levels and inside the chamber 1 lead leaktightly into the internal chambers of these covers. The edges 110, 110' of said covers are suitably thickened and provided with holes for the passage of screws 11, 11' for fixing them to the walls 101, 201. It will be understood that said screws 11, 11' can be replaced by any other suitable removable or even non removable fixing means and/or methods. The covers 10, 10' have, in asymmetric position, at least one transverse dividing wall 210, 210' which meets said walls 101, 201 of the chamber 1, through an intermediate transverse portion 109, 109' of said seals 9, 9', in such a way as to define, within said covers, two cavities of different heights A, B and A', B', into which the ends of the channels C of the sections 7 located at different levels in the chamber 1 open. The least tall cavities A and A' have at their ends or in an intermediate position at least one respective orifice 12, 12'. The covers 10, 10' are identical and are mounted on the walls 101 and 201 upside down relative to each other, so that the orifice 12' of the cover 10' is in the lower part of the chamber 1 and vice versa, with the orifice 12 of the cover 10 in the upper part of the same chamber 1. The lower orifice 12' is connected to the inlet carrying water to be heated, while the upper orifice 12 is connected to the hot water outlet. As indicated by arrows F1, water entering via the lower orifice 12', and therefore into the lower cavity A' of the cover 10', passes through the channels C of the set of sections 7 located at the lower level, which draw off the residual heat of the burnt fumes passing out of the boiler chamber 1, and the preheated water then passes out into the lower, taller cavity B of the cover 10, from where it can rise into the channels C of the sections 7 located at the intermediate level for further heating, after which the water passing out of these sections, arrives in the upper and taller cavity B' of the cover 10', so that it can rise and pass through the channels of the sections 7 located at the upper level of the chamber 1, through which it picks up the greater heat generated by the burner flame 4, and finally the hot water passing out of these last-named sections 7, reaches the upper cavity A of the cover 10, and can pass out through the orifice 12 of the latter.

It can be seen in Figure 2 that, as already mentioned, the multi-channel sections 7 are mounted inside the chamber 1 at three different levels H1, H2 and H3, and that the outer sections of the three levels, marked 7', are arranged in close succession, optionally welded as indicated at 16, in such a way as to form continuous walls butted at the top against a skirt of the wall 301 containing the orifice 2 and at the bottom against a skirt of the wall 401 containing the orifice 3, so as to form with these walls 101, 201, the boiler's actual combustion chamber, through which all the heat produced by the flame 4 and associated combustion fumes is channelled, before the latter pass out through the lower collector 5. Said outer sections 7' are taller and wider than the inner sections, both for thermodynamic reasons and to ensure that the heat exchanger has adequate mechanical strength properties. The inner sections 7 on the upper level H1 are separated by suitable distances in the horizontal plane and have differing heights that decrease symmetrically towards the centre line of the chamber 1, in such a way that their tops create an approximate V arrangement in order not to be struck directly by the burner flame 4. The upper level H1 also has no sections 7 in the centre. This is to assist the downward path of the heat which is immediately intercepted by the sections 7 of the intermediate level H2, which are also positioned at suitable distances apart in the horizontal plane, though these occupy the entire transverse dimension of the chamber 1. The sections 7 on the lowest level H3 may optionally exceed in number those of the intermediate level H2 and they are offset with respect to the latter so as to be efficiently struck by the combustion fumes before the fumes reach the drain collector 5 at the bottom. The unoccupied volumes between the various sections 7 and 7' of the various levels become progressively narrower with decreasing height. This is to promote the condensation of water vapour out of the fumes and to improve the heat exchange with said sections 7, 7'.

The walls of the heat exchanger as described will be connected to each other in any way such as to allow the free thermal dilation of the parts affected by the heat, and said walls will be externally insulated with a suitable material as marked for example by 100 in Figure 2 and the whole assembly will be housed in a casing of sheet metal or the like, two of whose walls are marked 501 and 601 in this Figure 2. This insulation and the associated external casing walls, even if not illustrated, will obviously also cover the covers 10 and 10' shown in Figure 1.

The heat exchanger as described, which uses aluminium alloy components, can be effectively protected from the external acid corrosion from condensation and potential internal corrosion from the heated liquid by means of suitable coating or protective techniques such as passivation and/or anodization of its surfaces and/or any other suitable technique.

The exchanger as described and as illustrated in Figures 1 to 4 is suitable for conveying a single flow of liquid, but it will be understood that simple modifications may be made to it to heat two separate flows of water, using the sections 7 on the various levels separately for said two different destinations and providing cavities in the covers 10, 10' suitable for this purpose with corresponding separate inlet and outlet pipes for said two water flows, in order that the boiler may be able to be used both as a central heating system for space heating and for the production of hot water for supply to the taps. This variant is not considered here or illustrated in detail, being obvious and easy for those skilled in the art to implement.

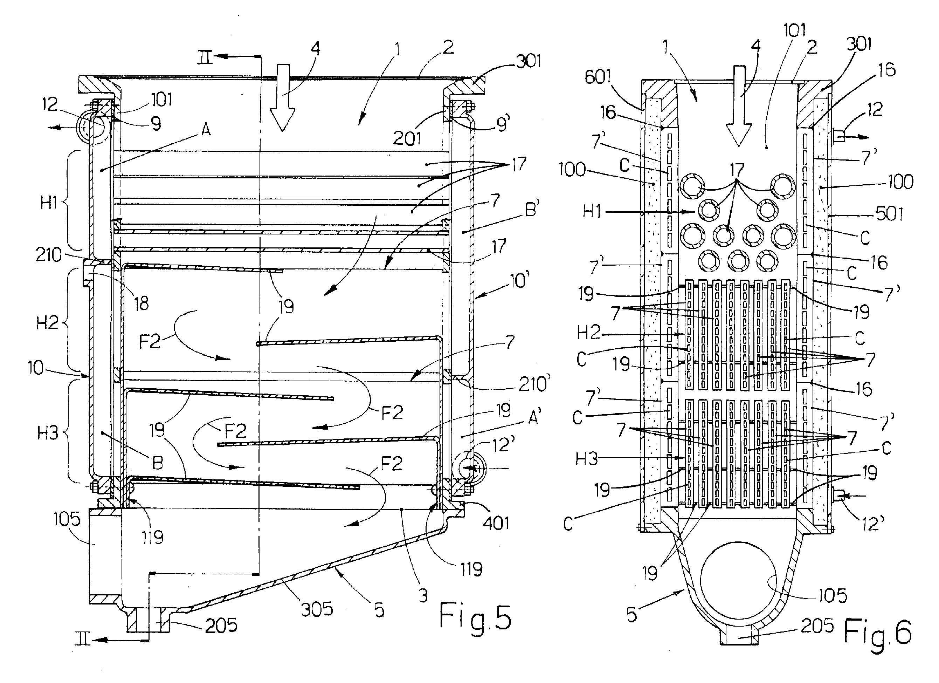

With reference to Figures 5 and 6, a description will now be given of a variant of the heat exchanger, in which the extruded heat-exchange sections of the combustion chamber are formed by tubes of aluminium alloy or other suitable material, of suitable cross section positioned so as to be staggered vertically, in such a way as to achieve circulation of a large throughput of water through the combustion chamber, so that each tube is struck by the heat all the way around the circumference of its cross section and so that the hot fumes follow a sinuous path through the bundle of tubes, thereby more satisfactorily bringing about the above condition, slowing down the fumes to an appropriate extent and further enhancing both the exchange of heat with said tubes and the consequent efficiency of the boiler.

As can be seen in Figures 5 and 6, the heat exchange stage in the top level H1, which is close to the combustion flame 4 and which is therefore surrounded by very high temperatures which must be quickly connected and evacuated by an efficient heat-exchange system, is made not in the form of multi-channel extruded sections like those used in the condensation stages at levels H2 and H3, as shown in the version depicted in Figures 1 and 2, but rather is formed by a plurality of extruded tubes 17 made of aluminium alloy or other suitable material, whose diameters may all be the same or different, for example larger diameters in the outer zones which, being boundary zones, must let as little heat as possible escape to the exterior. Said tubes 17 are welded leaktightly at their ends into corresponding holes in said walls 101 and 201 of the chamber 1, in a similar way to the lower extruded sections 7. To avoid being struck directly by the combustion flame 4, the tubes 17 are arranged in tiered rows to form an approximately V-shaped tube bundle (Figure 6), which defines vertical spaces for the fumes to pass through following a sinuous path, this being particularly advantageous for heat exchange purposes. What goes for the version shown in Figures 1 and 2 also goes for the tubes 17 for the purposes of the internal and/or external protection of the water pipes, for hygiene purposes and/or improvement of the resistance of the surfaces to chemical and physical deterioration. The covers 10, 10' attached via seals 9, 9' to the outer faces of the walls 101 and 201 of the chamber 1 and having intermediate horizontal dividing walls 210, 210', are exactly the same as in the version shown in Figure 1 and 2 in that cover 10' has a lower cold water inlet pipe 12', and cover 10 has an upper hot water outlet pipe 12. It can be seen in Figure 5 that the cold water entering by the pipe 12' is forced by the lower cavity of the cover 10' to pass through the channels C of the sections 7 of the stage at the bottom level H3 into the lower cavity of the opposite cover 10, which conducts the water to a higher level and forces it to pass through the channels C of the sections 7 forming the intermediate level H2, from where it proceeds to the upper cavity of the cover 10'. From here the water is carried to the upper level H1, and forced to pass through the tube bundle 17 where it picks up most of the heat, and on leaving the latter the hot water enters the top cavity of the cover 10, before passing out through the discharge pipe 12. Figure 1 shows that the covers 10, 10' are no longer identical and are inverted as in the version shown in Figures 1 and 2, and that at the top of the bottom cavity of the cover 10 there is at least one threaded opening 18 which is useful for example for connecting a temperature probe (not shown) and/or other means necessary for the correct and safe operation of the boiler, such as automatic air or gas bubble bleeds. As in the previous variant, the walls of the chamber 1 perpendicular to the aforesaid walls 101 and 201 are made up of a series of multi-channel sections 7', similar to but larger than the sections 7, attached to each other and to the corresponding skirts of the horizontal walls 301, 401 with welds 16, and through whose channels heat-exchange water is passed, for example via said internal chambers inside the covers 10, 10'. The walls of the heat exchanger depicted in Figures 5 and 6 are connected to each other in any way such as to allow free thermal dilation of the parts affected by the variations of heat and said walls will be insulated on the outside by a suitable material or by an air gap, as marked at 100 for example in Figure 6, and the whole assembly will be housed in a container made of sheet metal or the like, optionally tubular in shape, two walls of which are marked at 501 and 601 in this Figure 6. This insulation 100 and the associated external casing walls, even if not illustrated, may also have the covers 10, 10' shown in Figure 1. Another improvement to the boiler as described is for the condensation levels H2 and H3 between the rows of extruded sections 7 to incorporate comb-like approximately horizontal baffles 19 (Figures 5, 6) projecting from alternate walls 101 and 201 and extending towards the opposite wall to a length which increases progressively the lower down the baffle 19 and whose mutual spacing decreases progressively downwards. These baffles slope downwards at a suitable angle so that condensation collected on them drips onto the baffles below until it arrives by gravity in the collector 5 at the bottom. Because of the presence of the baffles 19, the combustion fumes are forced to follow a sinuous path as indicated by the arrows F2, which increases the period of contact between these fumes and the condensation sections 7 on levels H2 and H3. This increases the efficiency of the boiler even if the chamber 1 is not very tall. To avoid structural complications which may result from the obstructions created vertically over the tube bundle 17, it is suggested in the example here in Figure 5 that all the comb-like baffles 19 should begin at respective strips 119 positioned sideways and fixed to the bottom of the walls 101 and 201, but it will be understood that any other useful and advantageous construction may be adopted for implementing these baffles 19, with a view for example to facilitating their replacement. The baffles 19 are made from any suitable material compatible with that which forms the other internal components of the boiler and resistant to the acidity of the condensation of the discharge fumes.

## Claims

1. Heat exchanger particularly suitable for the construction of condensing-type heating boilers, which comprises a chamber (1), in the top of which gas or other fuel is burned (4), which is provided with one or more water flow circuits defining a heating stage where the water itself is heated by the heat radiated by the combustion and absorbed by the walls of said chamber (1) and which below this has at least one stage with condensing means for absorbing the residual heat of the combustion fumes before the latter pass out of said chamber, this heat being used to preheat the water before the water enters said heating stage, said heat exchanger being **characterized in that** said combustion chamber and/or said condensing means contain hollow heat-exchange sections (7, 7', 17) occupying the whole of the planview projection of the space through which the heat passes and extending from at least one wall or zone (101) to the opposite wall or zone (201) of the chamber or body that circumscribes this space, these sections being provided with one or more longitudinal channels and being made in any material with good heat-conducting properties and such that the water to be heated and/or preheated can be passed through these channels.

2. Heat exchanger according to Claim 1, **characterized in that** said hollow sections (7, 7', 17) are extruded in for example a suitable aluminium alloy.

3. Heat exchanger according to Claim 2, **characterized in that** said hollow sections (7, 7', 17) are treated in such a way that their outer surface and/or the inner surfaces of their channels is/are resistant to acid attack.

4. Heat exchanger according to one or more of the preceding claims, **characterized in that** the ends of said hollow sections (7, 7', 17) are inserted into slots or windows (6) formed in opposite plates or walls (101, 201), in whose outer faces the same ends of these sections are then fixed by any suitable leakproof fixing procedure, preferably a friction stir welding procedure, after which covers (10, 10') are fixed with at least peripheral leaktightness to the outside of said respective plates (101, 201), cavities being defined between said covers and said plates, and said covers having respective orifices (12, 12') for the water to flow through said hollow sections (7, 7', 17).

5. Heat exchanger according to the preceding claims, **characterized in that** both the heating stage and the pre-heating stage comprise multi-channel hollow sections (7, 7'), of the correct number and appropriately distributed at different levels of the heat exchanger, for example, at three different levels (H1, H2, H3), the inner multi-channel sections (7) of the top level (H1) being appropriately spaced apart in the horizontal plane and having different heights decreasing symmetrically towards the centre line of the chamber (1) of the heat exchanger, in such a way that their tops form an approximate V arrangement such as not to be struck directly by the combustion flame (4), and **in that** the topmost set of multi-channel sections is provided with a central through-opening whose amplitude is such as to promote the downward movement of the heat which is immediately intercepted by the multi-channel sections (7) of the lower levels (H2, H3), which are also suitably spaced apart from each other in the horizontal plane and which occupy the full transverse dimension of the heat exchanger chamber (1).

6. Heat exchanger according to Claim 5, **characterized in that** in a constructional variant, at least the heat-exchange sections located on at least the topmost level (H1) which experiences the highest temperatures are made from tubes (17) of aluminium alloy or other suitable material, of suitable cross section, said tubes being **characterized by** being staggered vertically and welded leaktightly at their ends in corresponding holes formed in the opposite walls (101, 201) of the boiler chamber (1), in much the same way as the multi-channel heat exchange sections (7) which operate at the lower levels (H2, H3), the whole being such as to achieve circulation of a large throughput of water through said tubes (17) operating in the combustion chamber, so that each tube (17) is struck by the heat all the way around the circumference of its cross section and so that the hot fumes follow a sinuous path through the bundle of said tubes (17), thereby more satisfactorily bringing about the above condition, slowing down the fumes to an appropriate extent and further enhancing the exchange of heat with said tubes (17) and the efficiency of the boiler.

7. Heat exchanger according to Claim 6, **characterized in that** said heat exchange tubes (17) of the top stage (H1) are of equal or different diameters, being for example of a larger diameter in the outer zones which, being boundary zones, must allow as little heat as possible to escape to the outside.

8. Heat exchanger according to Claim 6, **characterized in that** in order that said tubes (17) which perform the heat exchange in the top level (H1) are not struck directly by the combustion flame (4), they are arranged in tiered rows, in such a way as together to form an approximately V-shaped tube bundle defining vertical spaces for the fumes to pass through, following a sinuous path, as is particularly beneficial in improving the efficiency of the heat exchanger.

9. Heat exchanger according to Claim 4, **characterized in that** said covers (10, 10') are made in such a way as to form cavities of different heights (A, B, A', B') with said plates (101, 201), so that said cavities allow the water to flow (F1) through the successive multi-channel sections (7, 7') located at the different heights, by following a zig-zag path, with the water to be heated entering through the lower, least tall cavity of one cover (10') and with the hot water exiting from the upper, least tall cavity of the other cover (10), and **in that** at least one of said covers (10) can be provided in an appropriate position with at least one optionally threaded opening (18) for use in installing a thermostatic probe and/or other suitable means necessary for the correct and safe operation of the boiler, such as, for example, valves for the automatic bleeding of air or gas bubbles.

10. Heat exchanger according to one or more of the preceding claims, **characterized in that** the condensation levels (H2, H3) contain approximately horizontal comb-like baffles (19) projecting alternately from either wall (101, 201) supporting the heat-exchange means (17, 7) and extending towards but not touching the opposite wall, the whole being such that owing to the presence and staggered arrangement of said baffles (19) the combustion fumes are forced to follow a sinuous path which increases the contact time between the fumes and the condensation sections (7), making the boiler very efficient even though its height is very limited.

11. Heat exchanger according to Claim 10, **characterized in that** the horizontal length of the baffles (19) preferably increases progressively towards the bottom.

12. Heat exchanger according to Claim 10, **characterized in that** the distance between the baffles (19) preferably decreases progressively towards the bottom.

13. Heat exchanger according to Claim 10, **characterized in that** the baffles (19) preferably slope down so that the condensation that collects on them drains onto the baffles below until it arrives by gravity in the bottom collector (5) of the boiler.

14. Heat exchanger according to Claim 10, **characterized in that** in order to avoid the complications of construction which can result from the obstructions created in the vertical direction by the upper tube bundle (17), all or some of said comb-like baffles (19) may begin with respective strips (119) placed sideways against and fixed to the lower part of the walls (101, 201) which support the heat-exchange sections (17, 7, 7').

15. Heat exchanger according to one or more of the preceding claims, **characterized in that** the outer multi-channel sections (7') are positioned in strict succession and in contact with each other and with upper and lower skirts (301, 401) of the walls and are preferably welded in the contact zones (16) in such a way as basically to form continuous walls, and the dimensions of both the solid and hollow parts of these sections (7') are preferably greater than the dimensions of the inner multi-channel sections (7).

16. Heat exchanger according to one or more of the preceding claims, **characterized in that** in order to allow free thermal dilation of this heat exchanger, said walls (101, 201) of its chamber (1) are connected to the consecutive other walls of the same chamber in such a way that they are able to move with respect to the latter, by means of expansion joints, for example.

17. Heat exchanger according to one or more of the preceding claims, **characterized in that** it can be set up to heat one or two separate flows of water by using said heat-exchange sections (7, 7', 17) of the various levels(H1, H2, H3), separately for said two different destinations, and providing in said covers (10, 10') cavities that are suitable for this purpose with individual separate inlet and outlet pipes for said two flows of water, in order that the boiler can be used both for the central heating system for space heating and for the production of hot water supplied to the taps.
